# EUROPÄISCHE PATENTSCHRIFT

(11) **EP 2 605 946 B1**
(45) Veröffentlichungstag und Bekanntmachung des Hinweises auf die Patenterteilung: **18.03.2015**
(21) Anmeldenummer: 11741113.2
(22) Anmeldetag: 28.07.2011
(51) Int. Cl.: B60T 13/567, F15B 15/10

(54) **UNTERDRUCKBREMSKRAFTVERSTÄRKER MIT EINER MONTAGEFREUNDLICHEN KAMMERANORDNUNG UND VERFAHREN ZUR MONTAGE EINES UNTERDRUCKBREMSKRAFTVERSTÄRKERS**
VACUUM BRAKE BOOSTER HAVING AN EASY TO ASSEMBLE CHAMBER ARRANGEMENT AND METHOD FOR MOUNTING A VACUUM BRAKE BOOSTER
SERVOFREIN À DÉPRESSION PRÉSENTANT UN ENSEMBLE DE CHAMBRES FACILE À ASSEMBLER ET PROCÉDÉ D'ASSEMBLAGE D'UN SERVOFREIN À DÉPRESSION

(30) Priorität: 19.08.2010 DE 102010034827
(43) Veröffentlichungstag der Anmeldung: 26.06.2013
(73) Patentinhaber: Lucas Automotive GmbH, 56070 Koblenz (DE)
(72) Erfinder: GIESE, Hans-Martin, 56751 Polch (DE); LAREQUI, David Lopéz, 56072 Koblenz (DE)
(74) Vertreter: Thum, Bernhard
(86) Internationale Anmeldenummer: PCT/EP2011/003813
(87) Internationale Veröffentlichungsnummer: WO 2012/022424

(56) Entgegenhaltungen:
- EP-A1- 2 072 362
- DE-A1- 10 334 457
- DE-A1- 19 857 054

## Beschreibung

Die vorliegende Erfindung betrifft einen Unterdruckbremskraftverstärker mit einer montagefreundlichen Kammeranordnung. Dieser Unterdruckbremskraftverstärker ist mit einer Kammeranordnung zur Erzeugung einer eine Bremsbetätigungskraft unterstützenden Servokraft versehen, wobei die Kammeranordnung ein Gehäuse umfasst, in dem eine Arbeitskammer von einer Unterdruckkammer durch eine bewegliche Wand getrennt ist, wobei das Gehäuse eine erste Gehäuseschale und eine zweite Gehäuseschale aufweist, die in einem Verbindungsbereich dichtend miteinander verbindbar oder verbunden sind, wobei im Verbindungsbereich ein flexibler Abschnitt der beweglichen Wand dichtend angeordnet ist, und wobei die Gehäuseschalen des Gehäuses von wenigstens zwei Befestigungsbolzen zur Befestigung des Unterdruckbremskraftverstärkers an einem Fahrzeugchassis durchsetzt sind.

Derartige Unterdruckbremskraftverstärker sind aus dem Stand der Technik bekannt. Grundsätzlich ist es erforderlich, das Gehäuse mit wenigstens zwei Gehäuseschalen auszubilden, um im Rahmen der Montage die für die Kammeranordnung erforderlichen Teile im Inneren des Gehäuses zu montieren. Ist dieser Montagevorgang abgeschlossen, so müssen die beiden Gehäuseschalen aneinander fixiert werden. Im weiteren Verlauf der Montage wird dann an dem Unterdruckbremskraftverstärker und insbesondere an den vorspringenden Befestigungsbolzen die Hauptbremszylinderanordnung angebracht. Erst danach kann eine Verschraubung und eine abschließende Fixierung der beiden Gehäuseschalen aneinander erfolgen.

Dem Erfordernis der Fixierung der Gehäuseschalen aneinander vor Montage der Hauptbremszylinderanordnung wurde im Stand der Technik in verschiedener Weise Rechnung getragen. So zeigt beispielsweise das Dokument EP 0 055 656 B1 einen Unterdruckbremskraftverstärker und ein Verfahren zu dessen Herstellung, bei dem die beiden Gehäuseschalen im Verbindungsbereich nach der Montage der in der Kammeranordnung anzuordnenden Bauteile mit einer aufwändigen Verstemmungsvorrichtung verstemmt werden. Diese Montageschritte, insbesondere das Verstemmen, sind aufwändig und kostenintensiv.

Eine ähnliche Lösung zur Verbindung der beiden Gehäuseschalen ist aus dem Dokument DE 29 42 571 Al bekannt. Auch bei dieser Lösung werden die beiden Gehäuseschalen durch aufwändiges Verstemmen aneinander fixiert.

Auch das Dokument EP 2 072 362 A1 beschäftigt sich mit dem Erfordernis, die beiden Gehäuseschalen bei der Montage dauerhaft miteinander zu verbinden. Dieses Dokument schlägt vor, verschiedene Rastverbindungen zu verwenden, beispielsweise Sicherungsringe oder Rastnasen, oder gar Verstimmungen an den Befestigungsbolzen vorzunehmen. Der Nachteil der in diesem Dokument geschilderten Lösungen besteht darin, dass sie auch relativ aufwändig zu montieren bzw. herzustellen und nur schwer oder nur noch destruktiv lösbar sind.

Demgegenüber ist es Aufgabe der vorliegenden Erfindung einen Unterdruckbremskraftverstärker der eingangs bezeichneten Art sowie ein Verfahren zu dessen Herstellung bereitzustellen, bei dem mit einfachen Mitteln die beiden Gehäuseschalen zueinander verriegelt und bei Bedarf auch wieder ohne größeren Aufwand entriegelt werden können.

Diese Aufgabe wird durch einen Unterdruckbremskraftverstärker der eingangs bezeichneten Art gelöst, bei dem vorgesehen ist, dass wenigstens einer der Befestigungsbolzen mit einer Eingriffsformation versehen ist, mit der eine der Gehäuseschalen bei der Montage lösbar in Eingriff bringbar und so gegenüber der anderen der Gehäuseschalen in einer vorbestimmten Position verriegelbar ist.

Die Erfinder haben erkannt, dass statt dem aufwändigen Verstemmprozess im Verbindungsbereich der beiden Gehäuseschalen und auch statt der Anbringung von Rastmitteln oder Verstemmungen an den Befestigungsbolzen, die zum Teil nur aufwändig oder gar nur destruktiv gelöst werden können, erfindungsgemäß eine mit wesentlich geringerem Aufwand montierbare Lösung möglich ist, indem die Gehäuseschalen einfach zueinander verriegelt werden, beispielsweise nach dem Bajonettprinzip. Im Rahmen der Montage können so zunächst die im Inneren der Kammeranordnung erforderlichen Bauteile angebracht und sodann die zweite Gehäuseschale aufgesteckt und durch Relativverlagerung zur ersten Gehäuseschale verriegelt werden. Aufwändige Verstemmprozesse an der Kammeranordnung oder an den Befestigungsbolzen sind nicht erforderlich. Auch eine nachteilige Verrastung der beiden Gehäuseschalen durch entsprechende Rastmittel, die ferner dem Risiko unterliegt, dass die Rastkräfte nicht dauerhaft ausreichen oder sich die Verrastung im Laufe der weiteren Montage lockert, kann somit umgangen werden.

Wie vorstehend erläutert, ist es erfindungsgemäß möglich, dass der Verbindungsbereich der beiden Gehäuseschalen frei von Verstemmungen ausgeführt ist. Bei Bedarf kann aber auch später im Verbindungsbereich eine lokale Verstemmung erfolgen

Bei einer bevorzugten Ausführungsvariante der Erfindung ist vorgesehen, dass der Eingriff zwischen der Eingriffsformation des wenigstens einen Befestigungsbolzens und der betreffenden Gehäuseschale formschlüssig ist. So ist es gemäß einer Ausführungsform der Erfindung möglich, dass wenigstens einer der Befestigungsbolzen eine in einem Umfangsbereich verlaufende oder umlaufende radiale Vertiefung aufweist. Diese Vertiefung kann in Form einer Ringnut ausgebildet sein. Alternativ zu einer Vertiefung kann erfindungsgemäß vorgesehen sein, dass wenigstens einer der Befestigungsbolzen einen in einem Umfangsbereich verlaufenden oder umlaufenden radialen Vorsprung aufweist. Dabei kann es sich um einen Ringvorsprung oder um eine lokale Nase handeln. Alternativ zu einer am Befestigungsbolzen angeformten Eingriffsformation ist es erfindungsgemäß ferner möglich, dass ein Haltebolzen mit einer Eingriffsformation auf wenigstens einen Befestigungsbolzen aufschraubbar oder in wenigstens einen Befestigungsbolzen einschraubbar ist. Der Haltebolzen wird sozusagen als zusätzliches Befestigungselement einfache lösbar auf ein Außengewinde des Befestigungsbolzens oder in ein Innengewinde im Befestigungsbolzen geschraubt.

Um eine sichere Verriegelung der beiden Gehäuseschalen aneinander zu gewährleisten kann erfindungsgemäß bevorzugt vorgesehen sein, dass sämtliche Befestigungsbolzen mit einer Eingriffsformation ausgebildet sind.

Hinsichtlich der Ausbildung der Gehäuseschalen kann erfindungsgemäß vorgesehen sein, dass zur Aufnahme der Befestigungsbolzen entsprechende Aufnahmeöffnungen in jeder der Gehäuseschalen vorgesehen sind, wobei wenigstens eine der Aufnahmeöffnungen eine von einer Kreisform abweichende Geometrie mit wenigstens einem Halteabschnitt aufweist, der mit der Eingriffsformation verriegelnd in Eingriff bringbar ist. Dabei ist es möglich, dass die wenigstens eine Aufnahmeöffnung zwei diagonal gegenüberliegende Halteabschnitte aufweist. Dies erlaubt eine geringere Fehleranfälligkeit bei der Verriegelung, weil dem Monteur zwei Richtungen zur Verfügung stehen, in die er die Gehäuseschalen zueinander verlagern und dadurch verriegeln kann. Vergleicht man die Situation wieder mit dem Bajonettverschlussprinzip, so lässt sich gemäß dieser Ausführungsvariante der Erfindung der Bajonettverschluss in zwei Richtungen verriegeln.

Wie eingangs bereits erwähnt betrifft die Erfindung ferner ein Verfahren zur Montage eines Unterdruckbremskraftverstärkers der vorstehend beschriebenen Art, wobei der Unterdruckbremskraftverstärker mit einer Kammeranordnung zum Erzeugen einer eine Bremsbetätigungskraft unterstützenden Servokraft ausgeführt ist, wobei die Kammeranordnung ein Gehäuse umfasst, in dem eine Arbeitskammer von einer Unterdruckkammer durch eine bewegliche Wand getrennt ist, wobei das Gehäuse eine erste Gehäuseschale und eine zweite Gehäuseschale aufweist, die in einem Verbindungsbereich dichtend miteinander verbindbar oder verbunden sind, wobei im Verbindungsbereich ein flexibler Abschnitt der beweglichen Wand dichtend angeordnet ist, und wobei die Gehäuseschalen des Gehäuses von wenigstens zwei Befestigungsbolzen zur Befestigung des Unterdruckbremskraftverstärkers an einem Fahrzeugchassis durchsetzt sind, wobei weiter wenigstens einer der Befestigungsbolzen mit einer Eingriffsformation versehen ist.

Dabei zeichnet sich das erfindungsgemäße Verfahren durch die Schritte aus:
- Aufstecken einer der Gehäuseschalen auf die andere der Gehäuseschalen derart, dass die Befestigungsbolzen sich jeweils durch zugehörige Aufnahmeöffnungen in der aufgesteckten Gehäuseschale erstrecken und
- Verriegeln der aufgesteckten Gehäuseschale durch Relativverlagerung zur anderen Gehäuseschale, wobei die Eingriffsformation mit der aufgesteckten Gehäuseschale in verriegelnden Eingriff gelangt.

Die Erfindung wird im Folgenden beispielhaft anhand der beiliegenden Figuren erläutert. Es stellen dar:
- Fig. 1: eine Schnittansicht durch eine Kammeranordnung eines erfindungsgemäßen Unterdruckbremskraftverstärkers;
- Fig. 2: eine Vorderansicht der in Figur 1 linken Gehäuseschale der Kammeranordnung;
- Fig. 3: eine vergrößerte Teilansicht zu einer Aufnahmeöffnung in der Gehäuseschale aus Fig. 2;
- Fig. 4: eine zu Fig. 3 alternative Ausbildung der Geometrie der Aufnahmeöffnung;
- Fig. 5: eine Darstellung eines Endes eines Befestigungsbolzens beim Aufstecken der Gehäuseschale;
- Fig. 6: eine Ansicht zur Erläuterung der Verriegelung der Gehäuseschale;
- Fig. 7: das Ergebnis der Verriegelung der Gehäuseschale in der Ansicht entsprechend Figur 5;
- Fig. 8: eine Ansicht entsprechend Fig. 7 einer alternativen Ausführungsform des Befestigungsbolzens;
- Fig. 9: eine Ansicht entsprechend Fig. 6 nach der Verriegelung;
- Fig. 10: eine Ansicht einer weiteren alternativen Ausführungsform eines Befestigungsbolzens; und
- Fig. 11: eine Ansicht einer weiteren alternativen Ausführungsform eines Befestigungsbolzens.

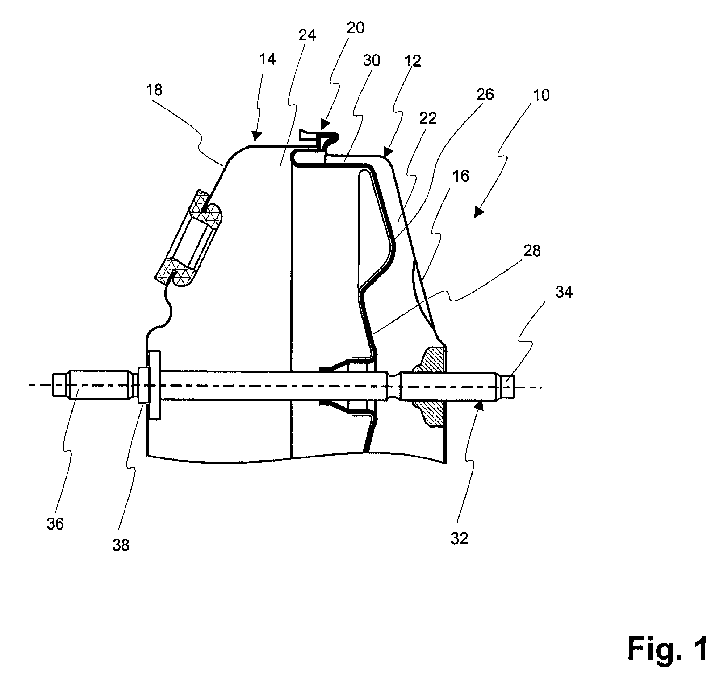

In Figur 1 ist ein geschnittener Teil eines allgemein mit 10 bezeichneten Unterdruckbremskraftverstärkers gezeigt. Insbesondere erkennt man in Figur 1 eine Kammeranordnung 12, die in einem Gehäuse 14 aufgenommen ist. Das Gehäuse 14 umfasst eine erste Gehäuseschale 16 und eine zweite Gehäuseschale 18. Diese sind in einem Verbindungsbereich 20 miteinander verbunden, jedoch ohne Verstemmungen, sondern nur ineinander gesteckt.

Im Inneren des Gehäuses 14 umfasst die Kammeranordnung eine Arbeitskammer 22 und eine Unterdruckkammer 24. Die Arbeitskammer 22 ist von der Unterdruckkammer 24 durch eine bewegliche Wand 26 getrennt. Die bewegliche Wand 26 weist einen formstabilen Abschnitt 28 auf und ist in ihrem radialen Außenbereich mit einem flexiblen Abschnitt 30 versehen, der im Verbindungsbereich 20 dichtend zwischen den beiden Gehäuseschalen 16 und 18 eingeklemmt ist.

Man erkennt in Figur 1, dass das Gehäuse 14 zwei Befestigungsbolzen 32 durchsetzt wird (nur einer gezeigt), die mit ihren beiden axialen Enden 34, 36 aus dem Gehäuse 14 vorstehen. Das axiale Ende 34 dient zur Anbringung an dem Fahrzeugchassis, insbesondere an der Spritzwand der Karosserie. Das axiale Ende 36 dient zur Befestigung der nicht gezeigten Hauptbremszylinderanordnung.

Zur Montage wird zunächst die Gehäuseschale 16 verwendet, um darin beziehungsweise daran einzelne Komponenten anzubringen, wie beispielsweise die bewegliche Wand 26 mit einer nicht gezeigten Steuerventilanordnung, sowie die Befestigungsbolzen 32. Sodann wird die zweite Gehäuseschale 18 aufgesteckt. Um die beiden Gehäuseschalen aneinander zu fixieren, wurden im Stand der Technik entweder Verstemmungen im Verbindungsbereich vorgenommen oder es wurden aufwändige Sicherungsmaßnahmen im Bereich 38 an den Befestigungsbolzen vorgenommen, wie beispielsweise Verrastungen.

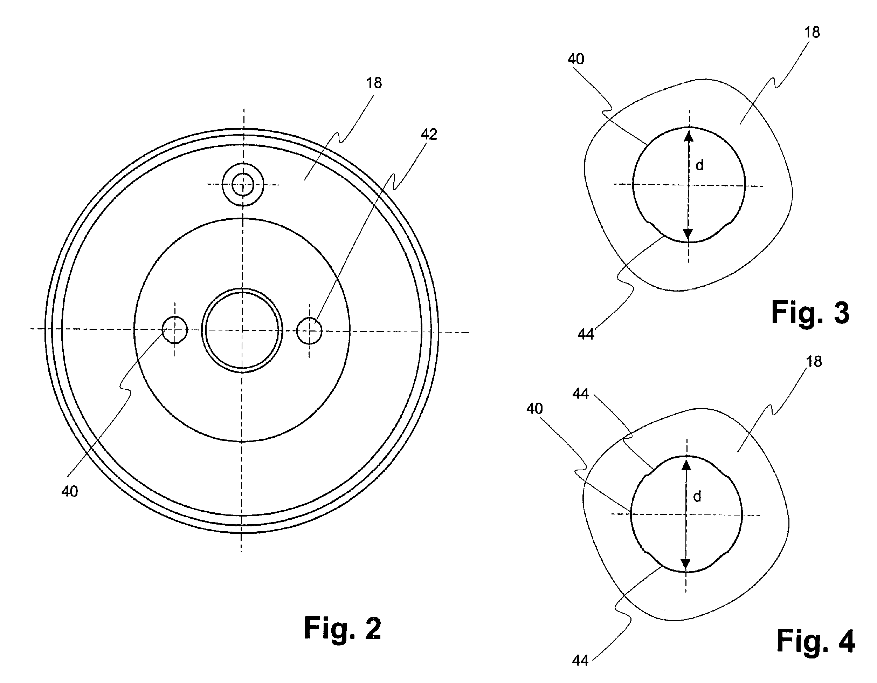

In diesem Zusammenhang ist bei einer ersten Ausführungsform der Erfindung gemäß Figur 2 hingegen vorgesehen, dass die Gehäuseschale 18 mit speziellen Aufnahmeöffnungen 40,42 ausgebildet ist. Figur 3 zeigt eine solche Aufnahmeöffnung in vergrößerter Ansicht. Die Aufnahmeöffnung 40 ist nicht kreisrund ausgebildet, sondern weist einen sich radial einwärts erstreckenden Halteabschnitt 44 auf. Dieser ist dazu vorgesehen, um mit einer Eingriffsformation am Befestigungsbolzen 32 verriegelnd in Eingriff zu gelangen, wie im Folgenden im Detail erläutert werden wird. Die Aufnahmeöffnung hat einen entsprechenden Halteabschnitt in ihrem oberen Bereich.

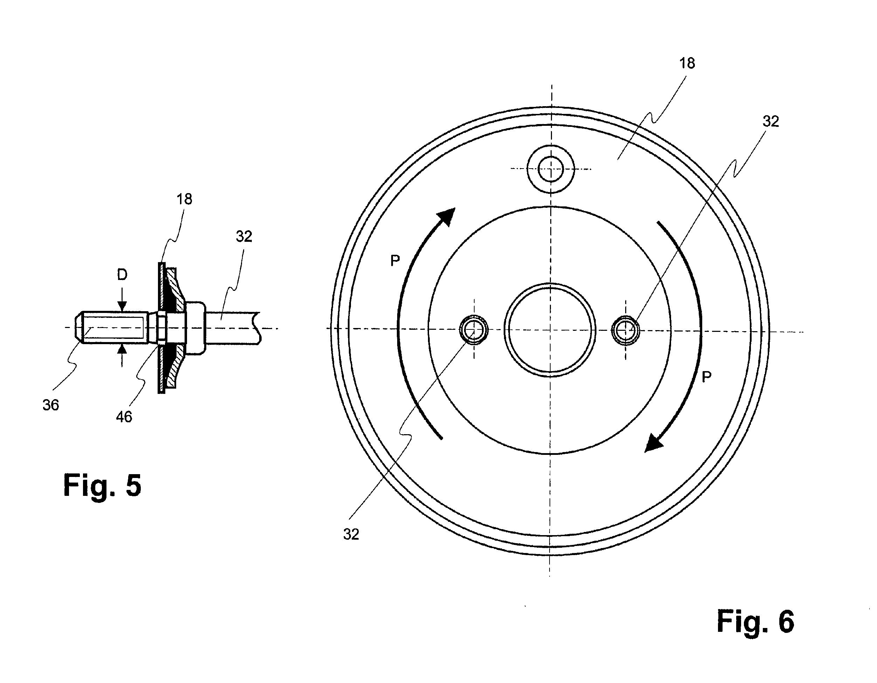

Man erkennt in Figur 5, dass am linken Ende 36 des Befestigungsbolzens 32 eine umlaufende Nut 46 vorgesehen ist. Der Durchmesser D des Befestigungsbolzens 32 ist an diesem linken Ende 36 so gewählt, das er trotz des nach radial einwärts vorspringenden Halteabschnitts 44 noch durch die Aufnahmeöffnung 40 gemäß Figur 3 einsteckbar ist.

Nach dem Einstecken ergibt sich ein Zustand entsprechend Figur 6. Zur weiteren Montage wird nun die Gehäuseschale 18 im Uhrzeigersinn entsprechend den Pfeilen P relativ zur anderen Gehäuseschale 16 und den Befestigungsbolzen 32 verdreht. Diese Relatiwerlagerung kommt einer Fixierung eines Bajonettverschlusses gleich.

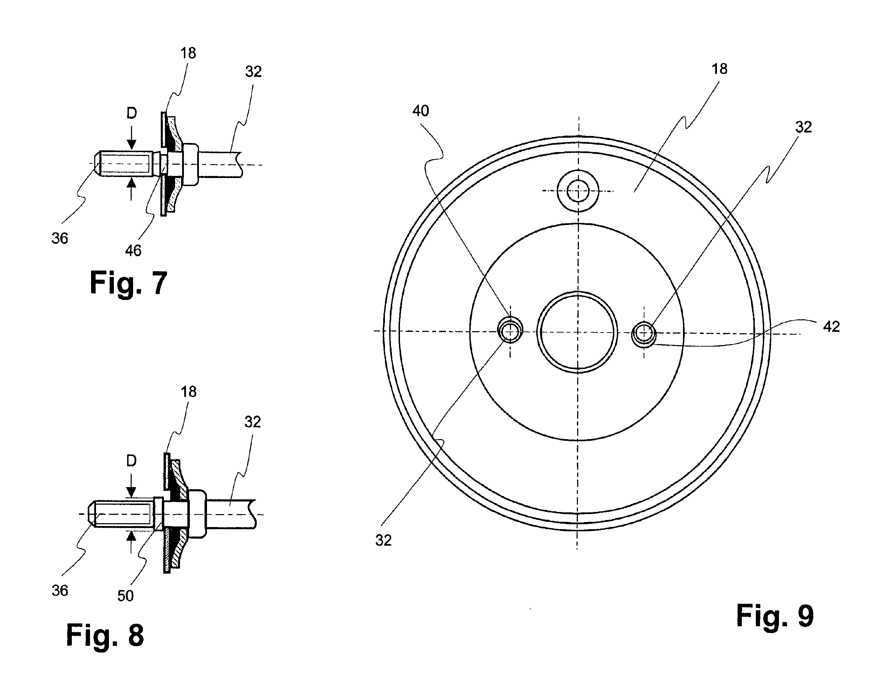

In Folge der Verdrehung entsprechend der Pfeile P, wird der Zustand gemäß Figur 9 erhalten. Dabei greifen die Halteabschnitte der Aufnahmeöffnungen 40 und 42, wie in Figur 7 in der Schnittansicht gezeigt, jeweils in die Nut 46 des Befestigungsbolzens 32, so dass sich die Gehäuseschale 18 nicht mehr in axialer Richtung lösen kann. Diese einfach montierbare Verriegelung lässt sich aber durch Drehen der Gehäuseschale 18 in zu den Pfeilen P entgegengesetzter Richtung, also im Gegenuhrzeigersinn wieder Lösen. Es handelt sich also nicht um eine dauerhafte Verriegelung, die nur unter größerem Aufwand oder gar destruktiv lösbar ist.

Figur 4 zeigt eine Abwandlung zu der Gestaltung der Aufnahmeöffnung 40 gemäß Figur 3. Bei der in Figur 4 gezeigten Ausführungsform sind zwei zueinander diagonal angeordnete, also gegenüberliegende Halteabschnitte 44 vorgesehen. Dies erlaubt es dem Monteur, zur wirksamen Herstellung der Verriegelung die Gehäuseschale 18 relativ zur Gehäuseschale 16 sowohl im Uhrzeigersinn also im Gegenuhrzeigersinn zu drehen. Selbstverständlich reicht der kleinste Durchmesser der Aufnahmeöffnung 40 gemäß Figur 4 immer noch aus, um den Befestigungsbolzen mit seinem Ende 36 hindurchzustecken.

Figur 8 zeigt eine gegenüber der Ausführungsform gemäß Figuren 5 und 7 abgewandelte Ausführungsform hinsichtlich der Gestaltung des Bolzenendes 36. Dabei ist statt einer Nut ein ringartiger Vorsprung 50 vorgesehen. Der Außendurchmesser des Vorsprungs 50 ist die derart gewählt, das er jeweils kleiner ist, als der kleinste Durchmesser der jeweiligen Aufnahmeöffnung 40 (inklusive Halteabschnitt(en) 44). Auch mit einem derartigen ringartigen Vorsprung 50 lässt sich eine Verriegelung erreichen, wie sie in Figur 9 gezeigt ist.

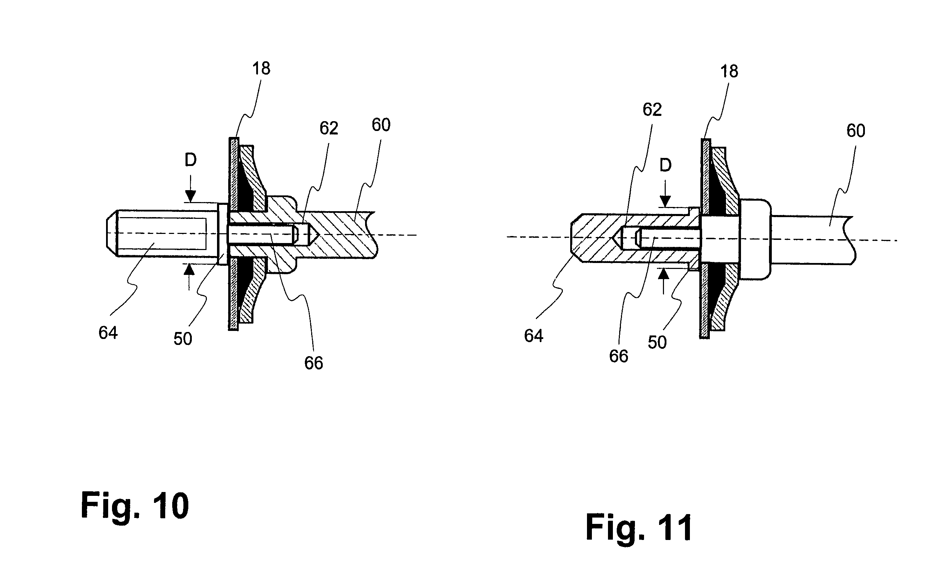

Die Ausführungsform gemäß Figur 10 zeigt, dass der Befestigungsbolzen 60 kürzer ausgebildet und an seinem axialen Ende mit einer Gewindebohrung 62 versehen sein kann. Nach dem Aufstecken der Gehäuseschale 18 wird ein entsprechend ausgebildeter Bolzenabschnitt 64, an dem ein Gewindestift 66 angeformt ist, in die Gewindebohrung 62 eingeschraubt. Auch der Bolzenabschnitt 64 weist einen Ringvorsprung 50 zur Fixierung der Gehäuseschale 18 auf.

Schließlich zeigt die Ausführungsform gemäß Figur 11 eine Abwandlung gegenüber der Ausführungsform gemäß Figur 10. Dabei ist der Gewindestift 66 am Befestigungsbolzen 60 angebracht und der Bolzenabschnitt 64 mit einer entsprechenden Gewindebohrung 62 auf den Gewindestift 66 aufgeschraubt. Die Gehäuseschale 18 wird wiederum über einen Ringvorsprung 50 gehalten.

## Patentansprüche

1. Unterdruckbremskraftverstärker (10) mit einer Kammeranordnung (12) zur Erzeugung einer eine Bremsbetätigungskraft unterstützenden Servokraft, wobei die Kammeranordnung (12) ein Gehäuse (14) umfasst, in dem eine Arbeitskammer (22) von einer Unterdruckkammer (24) durch eine bewegliche Wand (26) getrennt ist, wobei das Gehäuse (14) eine erste Gehäuseschale (16) und eine zweite Gehäuseschale (18) aufweist, die in einem Verbindungsbereich (20) dichtend miteinander verbindbar oder verbunden sind, wobei im Verbindungsbereich (20) ein flexibler Abschnitt (30) der beweglichen Wand (26) dichtend angeordnet ist, wobei die Gehäuseschalen (16,18) des Gehäuses (14) von wenigstens zwei Befestigungsbolzen (32) zur Befestigung des Unterdruckbremskraftverstärkers (10) an einem Fahrzeugchassis durchsetzt sind, und wobei wenigstens einer der Befestigungsbolzen (32) mit einer Eingriffsformation (46, 50) versehen ist, mit der eine der Gehäuseschalen (16) bei der Montage in Eingriff bringbar und so gegenüber der anderen der Gehäuseschalen (18) in einer vorbestimmten Position dauerhaft verriegelbar ist, **dadurch gekennzeichnet, dass** zur Aufnahme der Befestigungsbolzen (32) entsprechende Aufnahmeöffnungen (40, 42) in jeder der Gehäuseschalen (16,18) vorgesehen sind, wobei wenigstens eine der Aufnahmeöffnungen eine von einer Kreisform abweichende Geometrie mit wenigstens einem Halteabschnitt (44) aufweist, der mit der Eingriffsformation (46, 50) verriegelnd in Eingriff bringbar ist.

2. Unterdruckbremskraftverstärker (10) nach Anspruch 1,
**dadurch gekennzeichnet, dass** der Verbindungsbereich (20) der beiden Gehäuseschalen (16,18) frei von Verstemmungen ausgeführt ist.

3. Unterdruckbremskraftverstärker (10) nach Anspruch 1 oder 2,
**dadurch gekennzeichnet, dass** der Eingriff zwischen der Eingriffsformation (46, 50) des wenigstens einen Befestigungsbolzens (32) und der betreffenden Gehäuseschale (16, 18) formschlüssig ist.

4. Unterdruckbremskraftverstärker (10) nach einem der Ansprüche 1 bis 3,
**dadurch gekennzeichnet, dass** wenigstens einer der Befestigungsbolzen (32) eine in einem Umfangsbereich verlaufende oder umlaufende radiale Vertiefung (46) aufweist.

5. Unterdruckbremskraftverstärker (10) nach einem der Ansprüche 1 bis 3,
**dadurch gekennzeichnet, dass** wenigstens einer der Befestigungsbolzen (32) einen in einem Umfangsbereich verlaufenden oder umlaufenden radialen Vorsprung (50) aufweist.

6. Unterdruckbremskraftverstärker (10) nach einem der Ansprüche 1 bis 3,
**dadurch gekennzeichnet, dass** ein Haltebolzen (64) mit einer Eingriffsformation (46, 50) auf wenigstens einen Befestigungsbolzen (32) aufschraubbar oder in wenigstens einen Befestigungsbolzen (32) einschraubbar ist.

7. Unterdruckbremskraftverstärker (10) nach einem der vorangehenden Ansprüche,
**dadurch gekennzeichnet, dass** sämtliche Befestigungsbolzen (32) mit einer Eingriffsformation (46, 50) ausgebildet sind.

8. Unterdruckbremskraftverstärker (10) nach einem der vorhergehenden Ansprüche,
**dadurch gekennzeichnet, dass** die wenigstens eine Aufnahmeöffnung (40, 42) zwei diagonal gegenüberliegende Halteabschnitte (44) aufweist.

9. Verfahren zur Montage eines Unterdruckbremskraftverstärkers nach einem der vorangehenden Ansprüche, wobei der Unterdruckbremskraftverstärker (10) mit einer Kammeranordnung (12) zum Erzeugen einer eine Bremsbetätigungskraft unterstützenden Servokraft ausgeführt ist, wobei die Kammeranordnung (12) ein Gehäuse (14) umfasst, in dem eine Arbeitskammer (22) von einer Unterdruckkammer (24) durch eine bewegliche Wand (26) getrennt ist, wobei das Gehäuse (14) eine erste Gehäuseschale (16) und eine zweite Gehäuseschale (18) aufweist, die in einem Verbindungsbereich (20) dichtend miteinander verbindbar oder verbunden sind, wobei im Verbindungsbereich (20) ein flexibler Abschnitt der beweglichen Wand (26) dichtend angeordnet ist, und wobei die Gehäuseschalen (16, 18) des Gehäuses von wenigstens zwei Befestigungsbolzen (32) zur Befestigung des Unterdruckbremskraftverstärkers an einem Fahrzeugchassis durchsetzt sind,
wobei weiter wenigstens einer der Befestigungsbolzen (32) mit einer Eingriffsformation (46, 50) versehen ist,
wobei das Verfahren **gekennzeichnet ist durch** die Schritte:
- Aufstecken einer der Gehäuseschalen (16) auf die andere der Gehäuseschalen (18) derart, dass die Befestigungsbolzen (32) sich jeweils **durch** zugehörige Aufnahmeöffnungen (40, 42) in der aufgesteckten Gehäuseschale (16, 18) erstrecken und
Verriegeln der aufgesteckten Gehäuseschale (16) **durch** Relativverlagerung zur anderen Gehäuseschale (18), wobei die Eingriffsformation (46, 50) mit der aufgesteckten Gehäuseschale (16, 18) in verriegelnden Eingriff gelangt.

## Claims

1. A vacuum brake booster (10) having a chamber arrangement (12) for generating a servo force supporting a brake actuating force, wherein the chamber arrangement (12) comprises a housing (14) in which a working chamber (22) is separated from a vacuum chamber (24) by a movable wall (26), wherein the housing (14) has a first housing shell (16) and a second housing shell (18) which are sealingly connectable or connected to one another in a connecting region (20), wherein a flexible portion (30) of the movable wall (26) is sealingly arranged in the connecting region (20), wherein the housing shells (16, 18) of the housing (14) are penetrated by at least two fastening bolts (32) for fastening the vacuum brake booster (10) to a vehicle chassis, and wherein at least one of the fastening bolts (32) is provided with an engagement formation (46, 50) with which one of the housing shells (16) can be brought into engagement during the assembly and is thus permanently lockable in a predetermined position relative to the other housing shell (18),
**characterized in that** corresponding receiving openings (40, 43) are provided in each of the housing shells (16, 18) for receiving the fastening bolts (32), wherein at least one of the receiving openings has a geometry deviating from a circular shape and having at least one retention portion (44) which can be brought into locking engagement with the engagement formation (46, 50).

2. A vacuum brake booster (10) according to Claim 1,
**characterized in that** the connecting region (20) of the two housing shells (16, 18) is formed without caulking.

3. A vacuum brake booster (10) according to Claim 1 or 2,
**characterized in that** the engagement between the engagement formation (46, 50) of the at least one fastening bolt (32) and the respective housing shell (16, 18) is effected with form fit.

4. A vacuum brake booster (10) according to any of Claims 1 to 3,
**characterized in that** at least one of the fastening bolts (32) has a radial recess (46) circumferentially extending or running in a circumferential region.

5. A vacuum brake booster (10) according to any of Claims 1 to 3,
**characterized in that** at least one of the fastening bolts (32) has a radial projection (50) circumferentially extending or running in a circumferential region.

6. A vacuum brake booster (10) according to any of Claims 1 to 3,
**characterized in that** a retention bolt (64), having an engagement formation (46, 50), is screwable onto at least one fastening bolt (32) or screwable into at least one fastening bolt (32).

7. A vacuum brake booster (10) according to any of the preceding claims,
**characterized in that** all the fastening bolts (32) are configured with an engagement formation (46, 50).

8. A vacuum brake booster (10) according to any of the preceding claims,
**characterized in that** the at least one receiving opening (40, 42) has two diagonally opposed retention portions (44).

9. A method for assembling a vacuum brake booster according to any of the preceding claims, wherein the vacuum brake booster (10) is configured with a chamber arrangement (12) for generating a servo force supporting a brake actuating force, wherein the chamber arrangement (12) comprises a housing (14) in which a working chamber (22) is separated from a vacuum chamber (24) by a movable wall (26), wherein the housing (14) has a first housing shell (16) and a second housing shell (18) which are sealingly connectable or connected to one another in a connecting region (20), wherein a flexible portion of the movable wall (26) is sealingly arranged in the connecting region (20), and wherein the housing shells (16, 18) of the housing are penetrated by at least two fastening bolts (32) for fastening the vacuum brake booster to a vehicle chassis,
wherein at least one of the fastening bolts (32) is further provided with an engagement formation (46, 50),
wherein the method is **characterized by** the steps:
- attaching one of the housing shells (16) to the other housing shell (18) such that the fastening bolts (32) each extend through associated receiving openings (40, 42) in the attached housing shell (16, 18), and
- locking the attached housing shell (16) by a displacement relative to the other housing shell (18), wherein the engagement formation (46, 50) gets into locking engagement with the attached housing shell (16, 18).

## Revendications

1. Servofrein à dépression (10) pourvu d'un ensemble de chambres (12) pour produire une servoforce servant de force d'appoint apportée à une force d'actionnement de freinage, ledit ensemble de chambres (12) comportant un boîtier (14) à l'intérieur duquel une chambre de travail (22) est séparée par une paroi mobile (26) d'une chambre à dépression (24), ledit boîtier (14) présentant une première coque de boîtier (16) et une deuxième coque de boîtier (18) qui sont reliables ou reliées entre elles de manière étanche dans une zone de jonction (20), un segment (30) flexible de la paroi (26) mobile étant disposé de manière étanche dans la zone de jonction (20), les coques de boîtier (16, 18) du boîtier (14) étant traversées par au moins deux boulons de fixation (32) servant à fixer le servofrein à dépression (10) sur un châssis d'un véhicule automobile, et au moins un des boulons de fixation (32) étant pourvu d'un dispositif de prise (46, 50) à l'aide duquel une des coques de boîtier (16) peut être amenée en prise lors du montage et être ainsi verrouillée durablement par rapport à l'autre coque de boîtier (18),
**caractérisé en ce que** sont prévues dans chacune des coques de boîtier (16, 18) des ouvertures de logement (40, 42) correspondantes destinées à recevoir des boulons de fixation (32), au moins une des ouvertures de logement présentant une géométrie autre qu'une géométrie de forme circulaire avec au moins un segment de retenue (44) qui peut être amené de manière bloquante en prise avec le dispositif de formation (46, 50).

2. Servofrein à dépression (10) selon la revendication 1,
**caractérisé en ce que** la zone de jonction (20) des deux coques de boîtier (16, 18) est exempte d'opérations de matage.

3. Servofrein à dépression (10) selon la revendication 1 ou 2,
**caractérisé en ce que** la prise entre le dispositif de prise (46, 50) dudit au moins un boulon de fixation (32) et la coque de boîtier (16, 18) correspondante est assurée par complémentarité de forme.

4. Servofrein à dépression (10) selon l'une des revendications 1 à 3,
**caractérisé en ce qu'**au moins un des boulons de fixation (32) présente un creux (46) s'étendant dans une zone périphérique ou un creux (46) radial périphérique.

5. Servofrein à dépression (10) selon l'une des revendications 1 à 3,
**caractérisé en ce qu'**au moins un des boulons de fixation (32) présente une saillie (50) s'étendant dans une zone périphérique ou une saillie (50) radiale périphérique.

6. Servofrein à dépression (10) selon l'une des revendications 1 à 3,
**caractérisé en ce qu'**un boulon de retenue pourvu d'un dispositif de prise (46) peut être vissé sur au moins un boulon de fixation (32) ou dans au moins un boulon de fixation (32).

7. Servofrein à dépression (10) selon l'une des revendications précédentes,
**caractérisé en ce que** tous les boulons de fixation (32) sont réalisés pourvus d'un dispositif de prise (46, 50).

8. Servofrein à dépression (10) selon l'une des revendications précédentes,
**caractérisé en ce que** ladite au moins une ouverture de logement (40, 42) présente deux segments de retenue (44) diagonalement opposés.

9. Procédé permettant le montage d'un servofrein à dépression selon l'une des revendications précédentes, le servofrein à dépression (10) étant réalisé pourvu d'un ensemble de chambres (12) pour produire une servoforce servant de force d'appoint apportée à une force d'actionnement de freinage, l'ensemble de chambres (12) comportant un boîtier (14) à l'intérieur duquel une chambre de travail (22) est séparée par une paroi mobile (26) d'une chambre à dépression (24), ledit boîtier (14) présentant une première coque de boîtier (16) et une deuxième coque de boîtier (18) qui sont reliables ou reliées entre elles de manière étanche dans une zone de jonction (20), un segment (30) flexible de la paroi (26) mobile étant disposé de manière étanche dans la zone de jonction (20), les coques de boîtier (16, 18) du boîtier (14) étant traversées par au moins deux boulons de fixation (32) servant à fixer le servofrein à dépression (10) sur un châssis d'un véhicule automobile,
et, en outre, au moins un des boulons de fixation (32) étant pourvu d'un dispositif de prise (46, 50),
ce procédé étant **caractérisé par** les étapes suivantes :
- le montage d'une des coques de boîtier (16) sur l'autre coque de boîtier (18) de sorte que les boulons de fixation (32) s'étendent chacun à travers des ouvertures de logement (40, 42) correspondantes dans la coque de boîtier (16, 18) montée et
- le verrouillage de la coque de boîtier (16) montée par déplacement relatif par rapport à l'autre coque de boîtier (18), le dispositif de prise (46, 50) venant en prise de manière bloquante avec la coque de boîtier (16, 18) montée.
